# EUROPÄISCHE PATENTSCHRIFT

(11) **EP 1 447 215 B1**
(45) Veröffentlichungstag und Bekanntmachung des Hinweises auf die Patenterteilung: **19.10.2005**
(21) Anmeldenummer: 03025049.2
(22) Anmeldetag: 30.10.2003
(51) Int. Cl.: B32B 27/08, B32B 1/08, F16L 11/12

(54) **Verbundmaterial**
Composite Material
Matériau composite

(30) Priorität: 13.02.2003 DE 10306072
(43) Veröffentlichungstag der Anmeldung: 18.08.2004
(73) Patentinhaber: VERITAS AG, 63571 Gelnhausen (DE)
(72) Erfinder: Käppeler, Kurt-Robert, 63457 Hanau (DE)
(74) Vertreter: Grünecker, Kinkeldey, Stockmair & Schwanhäusser Anwaltssozietät

(56) Entgegenhaltungen:
- EP-A- 1 188 534
- WO-A-82/03713
- DE-A- 10 164 736
- FR-A- 2 565 006
- FR-A- 2 697 657
- US-B1- 6 432 559

## Beschreibung

Die vorliegende Erfindung betrifft einen mehrschichtigen Schlauch mit einer ersten extrusionsfähigen Schicht und zumindest einer zweiten Schicht, die miteinander verbunden sind, wobei die erste Schicht opak ist, und mit zumindest einem Markierungsabschnitt, wobei der Markierungsabschnitt zwischen den Schichten angeordnet ist und unter Anwendung von Röntgenstrahlen lesbar ist.

Ein derartiger mehrschichtiger Schlauch ist bereits aus der DE 101 64 736 A bekannt. Diese Druckschrift beschreibt einen Schlauch mit Markierung und ein Verfahren zur Markierung eines Schlauches. Der Schlauch umfasst eine Wandung, die ein Fluorpolymer umfasst, und eine röntgenkontrastfähige Markierung. Diese Markierung umfasst eine Röntgenkontrastbeschichtung, welche röntgenkontrastfähiges Material enthält. Die Markierung umfasst eine von der Röntgenkontrastbeschichtung verschiedene Farbmarkierungsschicht.

Ein mehrschichtiger Schlauch ist auch aus dem Stand der Technik bekannt. Dieser mehrschichtige Schlauch wird z. B. als Kraftstoffschlauch für Kraftfahrzeuge verwendet. Auf den Schlauch werden visuell sichtbare Markierungen mittels pigmentierter Tintenstrahldruckerfarbe aufgebracht. Zum Aufbringen der Farbe werden z. B. Tintenstrahldrucker oder Tampondruckmaschinen verwendet. Es werden z. B. das Herstellungsdatum oder das verwendete Material aufgedruckt.

Bisher ist die Rückverfolgbarkeit einzelner Prozessschritte schwierig, da nur die letzte Schicht des mehrschichtigen Schlauchs mit einem Stempelaufdruck gekennzeichnet werden kann. Auf die darunter liegenden Schichten kann z. B. nicht das Herstellungsdatum aufgedruckt werden. Die Herstellung der unteren Schichten kann eventuell bereits schon einige Tage vor dem Aufbringen der obersten Schicht erfolgt sein. Somit können Fehler, die in den inneren Schichten auftreten, nur schwer nachvollzogen werden. Weiterhin ist die Rückverfolgbarkeit einzelner Prozessschritte schwer, bei Oberflächen, die nicht bedruckt werden sollen oder bei Oberflächen, bei denen die Farbe z. B. durch Abrieb von der Oberfläche entfernt wurde.

Aufgabe der Erfindung ist es, einen mehrschichtigen Schlauch der eingangs genannten Art zu verbessern, insbesondere einerseits die Rückverfolgbarkeit einzelner Prozessschritte zu verbessern und eine Kennzeichnung von Produkten zu ermöglichen, deren Oberfläche nicht bedruckt sein soll und dabei gleichzeitig die Kennzeichnung besser geschützt sein soll.

Die Aufgabe wird erfindungsgemäß gelöst, durch einen mehrschichtigen Schlauch der eingangs genannten Art, bei dem auch die zweite Schicht extrusionsfähig und opak ist.

Diese Lösung hat den Vorteil, dass einzelne Prozessschritte rückverfolgt werden können. Es kann z. B. das Herstellungsdatum bzw. Verarbeitungsdatum auf jede Schicht aufgebracht werden. Darüber hinaus können auch Produkte gekennzeichnet werden, deren Oberfläche nicht bedruckt sein soll. Außerdem können die einzelnen Prozessschritte noch rückverfolgt werden, wenn die auf der Oberfläche angebrachte Farbe bereits abgerieben ist. Weiterhin kann durch Aufbringen des Markierungsabschnittes zwischen die Schichten der Markierungsabschnitt wirkungsvoll vor Abrieb geschützt werden

Durch den erfindungsgemäßen mehrschichtigen Schlauch können die Eigenschaften, z. B. eines Kraftstoffschlauches in einem Kraftfahrzeug, verbessert werden.

Günstig kann es zudem sein, wenn zumindest eine Schicht aus einem Elastomer besteht. Somit kann die Flexibilität weiter erhöht werden.

In einer bevorzugten Ausführungsform kann das Elastomer ein Kautschuk sein, wodurch die Haltbarkeit weiter verbessert werden kann.

Wenn der Kautschuk ein Ethylen-Acrylat-Kautschuk ist, kann die Haltbarkeit noch weiter erhöht werden.

Weiterhin kann es von Vorteil sein, wenn der Markierungsabschnitt durch Farbe gebildet wird. Auf diese Weise kann die Markierung leichter aufgebracht werden und die Dicke der Schicht wird nur geringfügig erhöht.

Zudem kann es sich als vorteilhaft erweisen, wenn die Farbe eine Jodverbindung enthält. Somit kann die Lesbarkeit durch Anwendung von Röntgenstrahlen weiter erhöht werden.

Von Vorteil kann es sein, wenn die Jodverbindung lopamidol ist, da dadurch die Lesbarkeit unter Anwendung von Röntgenstrahlen noch weiter erhöht werden kann.

Ebenfalls kann es von Vorteil sein, wenn die Farbe Kaliumjodid enthält, da dadurch die Lesbarkeit durch Anwendung von Röntgenstrahlen noch weiter erhöht werden kann.

Günstig kann es auch sein, wenn die Farbe Kaliumbromid enthält. Auch dadurch kann die Lesbarkeit durch Anwendung von Röntgenstrahlen weiter erhöht werden.

In einer vorteilhaften Weiterentwicklung der Erfindung kann die Farbe mittels eines Druckers auf den Schlauch aufbringbar sein, wodurch das Anbringen der Markierung weiter erleichtert wird.

Auch kann es sich als vorteilhaft erweisen, wenn der Drucker ein Tintenstrahldrucker ist. Dadurch kann das Aufbringen der Farbe noch weiter vereinfacht werden.

Es kann sich auch als günstig erweisen, wenn der Drucker ein Tampondrucker ist. Auf diese Weise ist es möglich, das Aufbringen der Farbe weiter zu vereinfachen.

Vorteilhaft kann es zudem sein, wenn die Markierungsabschnitte in Längsrichtung beabstandet und wiederholend angebracht sind. Dadurch kann die Markierung noch gelesen werden, wenn der Schlauch in mehrere Abschnitte zerteilt wurde.

Weiterhin wird ein Verfahren zum Herstellen eines erfindungsgemäßen mehrschichtigen Schlauchs beansprucht, bei dem die erste opake Schicht extrudiert wird, danach die Markierungsabschnitte, die unter Anwendung von Röntgenstrahlen lesbar sind, aufgebracht werden und anschließend zumindest eine zweite opake Schicht darauf extrudiert wird.

Diese Lösung hat den Vorteil, dass die Rückverfolgbarkeit einzelner Prozessschritte erleichtert wird. Es können die einzelnen Schichten des mehrschichtigen Schlauchs z. B. durch Aufbringen des Datums gekennzeichnet werden. Darüber hinaus ist eine Kennzeichnung von Produkten möglich, deren Oberfläche nicht bedruckt werden soll.

Günstig kann es sein, wenn ein Haftvermittler zwischen der ersten und der zweiten Schicht aufgebracht wird. Somit kann der Halt zwischen den Schichten weiter verbessert werden.

Ebenfalls kann es von Vorteil sein, wenn die Markierungsabschnitte durch Aufdrucken auf die Schicht aufgebracht wurden. Auf diese Weise kann das Anbringen der Markierungsabschnitte weiter erleichtert werden. Darüber hinaus wird die Dicke der Schicht durch das Anbringen der Markierungsabschnitte nur minimal erhöht.

Es kann sich auch als günstig erweisen, wenn sich die Markierungsabschnitte in Längsrichtung erstrecken. Auf diese Weise ist eine Rückverfolgung einzelner Prozessschritte auch noch möglich, wenn der Schlauch in einzelne Abschnitte zerteilt worden ist.

Die Erfindung wird nachstehend anhand von einem Ausführungsbeispiel und zugehöriger Zeichnungen näher erläutert. In diesen Zeichnungen zeigt
- Fig. 1: eine Schnittansicht eines erfindungsgemäßen mehrschichtigen Schlauchs, und
- Fig. 2: eine Seitenansicht des mehrschichtigen Schlauchs aus Figur 1.

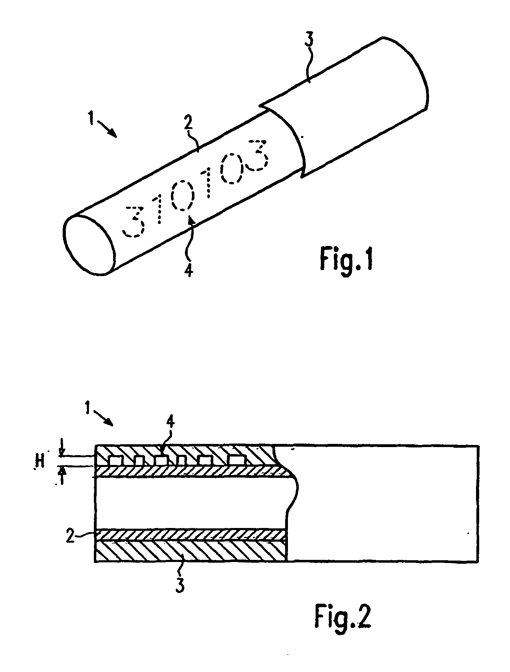

In Figur 1 ist ein mehrschichtiger Schlauch 1 dargestellt mit einer ersten Schicht 2 und einer zweiten Schicht 3. Die beiden Schichten 2, 3 sind opak und miteinander verbunden. Darüber hinaus ist ein Markierungsabschnitt 4 dargestellt, der zwischen den Schichten 2, 3 angeordnet ist und unter Anwendung von Röntgenstrahlen lesbar ist. In dem dargestellten Beispiel bezeichnet die Markierung das Datum. Es können jedoch auch andere Merkmale aufgebracht sein, wie z. B. das Material, eine Produktionsnummer oder ähnliches.

Auf diese Weise ist die Rückverfolgung einzelner Prozessschritte möglich. Darüber hinaus können auch Produkte gekennzeichnet werden, deren Oberfläche nicht bedruckt werden soll. Weiterhin ist eine Rückverfolgung sogar möglich, wenn eine Markierung, die auf der äußersten Schicht angebracht ist, bereits abgerieben ist. Außerdem kann der Markierungsabschnitt 4 durch seine Anordnung zwischen den Schichten 2, 3 wirkungsvoll vor Abrieb geschützt werden.

Es können auch mehrere Markierungsabschnitte 4 in Längsrichtung beabstandet und wiederholend aufgebracht werden, wodurch eine Rückverfolgung auch möglich ist, wenn der Schlauch 1 bereits in mehrere Teilabschnitte zertrennt worden ist.

Zumindest eine Schicht 2, 3 des Schlauches 1 besteht aus einem Elastomer, vorzugsweise einem Kautschuk. Dabei wird ein Ethylen-Acrylat-Kautschuk bevorzugt.

In Figur 2 ist eine Seitenansicht des Schlauches 1 aus Figur 2 dargestellt.

Dabei sind wiederum die Schichten 2 und 3 des Schlauches 1 gut zu erkennen.

Darüber hinaus ist die Höhe H des Markierungsabschnittes 4 gut zu erkennen.

Der Schlauch 1 kann auch mehr als zwei Schichten 2, 3 aufweisen. Auf jeder der Schichten können Markierungsabschnitte 4 angeordnet sein, die unter Anwendung von Röntgenstrahlen lesbar sind. Zusätzlich können auf der äußersten Schicht 3 nicht dargestellte visuell sichtbare Markierungen aufgebracht sein.

Wenn auf mehreren Schichten 2, 3 Markierungsabschnitte 4 aufgebracht sind, die unter Anwendung von Röntgenstrahlen lesbar sind, ist es günstig, wenn diese Markierungsabschnitte 4 gegeneinander versetzt sind. Damit kann die Lesbarkeit der Markierungsabschnitte 4 erhöht werden.

Der Markierungsabschnitt 4 wird üblicherweise durch Farbe 4 gebildet. Dabei wird Tintenstrahldruckerfarbe, der unterschiedliche Stoffe zugemischt werden, bevorzugt. Die Farbe 4 enthält eine Jodverbindung, üblicherweise lopamidol, das farblos ist, damit die Markierungsabschnitte 4 zwischen den Schichten unter Anwendung von Röntgenstrahlen lesbar sind. Alternativ haben sich als Zusatz zur Farbe auch Kaliumjodid und Kaliumbromid bewährt. Die Farbe 4 absorbiert Röntgenstrahlen. lopamidol wird chemisch bezeichnet als

*(S)-N, N'-bis*[2-*hydroxy*-1-(*hydroxymethyl*)*ethyl*]-2,4,6-*triiod*-5*-lactamidoisophtalamid*

Das Aufbringen der Farbe 4 auf die Schicht 2 hat den Vorteil, dass die Dicke der Schicht 2 durch die Farbe 4 nur minimal erhöht wird.

Die Farbe 4 wird üblicherweise mittels eines Druckers auf den Schlauch 1 aufgebracht. Dazu eignen sich Drucker wie Tintenstrahldrucker, Tampondrucker, Offsetdrucker, Laserdrucker usw.

Nachfolgend wird die Wirkungs- und Funktionsweise eines Verfahrens zum Herstellen eines erfindungsgemäßen mehrschichtigen Schlauchs 1 näher erläutert.

Zunächst wird die erste opake Schicht 2 extrudiert. Daraufhin werden die Markierungsabschnitte 4, die unter Anwendung von Röntgenstrahlen lesbar sind, aufgebracht. Anschließend wird eine zweite opake Schicht 3 darauf extrudiert. Diese Schicht kann wiederum mit Markierungsabschnitten 4 versehen werden und darauf kann dann wiederum eine weitere, nicht dargestellte Schicht extrudiert werden. Dieser Vorgang kann je nach Anzahl der gewünschten Schichten wiederholt werden.

Zwischen den Schichten 2, 3 wird ein Haftvermittler aufgebracht, um eine bessere Haftung der Schichten 2, 3 zu ermöglichen. Denkbar ist auch, dass zwischen den Schichten 2, 3 kein Haftvermittler aufgebracht wird. Jedoch ist die Haftung der Schichten 2, 3 mit Haftvermittler besser.

Die Markierungsabschnitte 4 werden durch Aufdrucken von Farbe 4, die wie bereits oben erläutert eine Jodverbindung enthält, auf die Schicht bzw. die Schichten aufgebracht. Dazu eignen sich Drucker wie Laserdrucker, Tampondrucker, Tintenstrahldrucker usw.

Günstig ist es, wenn sich die Markierungsabschnitte 4 in Längsrichtung des Schlauches 1 erstrecken. Auf diese Weise können die Markierungsabschnitte 4 auch gelesen werden, wenn der Schlauch 1 in mehrere Teile aufgeteilt worden ist. Somit ist die Rückverfolgung einzelner Prozessschritte auch bei Teilabschnitten des Schlauches 1 möglich. Wenn mehrere Markierungsabschnitte 4 auf verschiedenen Schichten angebracht sind, ist es günstig, die Markierungsabschnitte 4 der einzelnen Schichten gegeneinander versetzt anzuordnen, um die Lesbarkeit weiter zu erhöhen.

Zusätzlich können auf die oberste Schicht 3 noch nicht dargestellte visuell sichtbare Markierungen mittels pigmentierter Tintenstrahldruckerfarbe in herkömmlicher Weise aufgebracht werden.

Beim Durchstrahlen des Schlauches 1 mit Röntgenstrahlen können die Markierungsabschnitte 4, die sich zwischen den Schichten 2, 3 befinden, gelesen werden.

Mit dem erfindungsgemäßen mehrschichtigen Schlauch 1 und dem gezeigten Verfahren zum Herstellen eines erfindungsgemäßen mehrschichtigen Schlauchs 1 können einzelne Prozessschritte rückverfolgt werden. Es ist sogar möglich Prozesse rückzuverfolgen, die vorgelagert sind, d. h. Schichten, die unter der obersten Schicht angeordnet sind, können gekennzeichnet werden. Die angebrachten Markierungsabschnitte 4 können unter Anwendung von Röntgenstrahlen gelesen werden. Darüber hinaus können auch Produkte gekennzeichnet werden, deren Oberfläche nicht bedruckt werden soll.

Da sich die Markierungsabschnitte 4 zwischen den Lagen befinden, besteht nicht die Gefahr, dass die Farbe 4 z. B. durch Abrieb entfernt wird.

Der erfindungsgemäße mehrschichtige Schlauch, bzw. das vorgestellte Verfahren zum Herstellen eines erfindungsgemäßen mehrschichtigen Schlauchs, ist nicht nur wie oben beschrieben für Schläuche geeignet, sondern auch für Kunststoffe, Elastomere oder andere mehrschichtige Produkte.

## Patentansprüche

1. Mehrschichtiger Schlauch, mit einer ersten extrusionsfähigen Schicht (2) und zumindest einer zweiten Schicht (3), die miteinander verbunden sind, wobei die erste Schicht (2) opak ist, und mit zumindest einem Markierungsabschnitt (4), wobei der Markierungsabschnitt (4) zwischen den Schichten (2, 3) angeordnet ist und unter Anwendung von Röntgenstrahlen lesbar ist, **dadurch gekennzeichnet, dass** auch die zweite Schicht (3) extrusionsfähig und opak ist.

2. Mehrschichtiger Schlauch nach Anspruch 1, **dadurch gekennzeichnet, dass** zumindest eine Schicht (2, 3) aus einem Elastomer besteht.

3. Mehrschichtiger Schlauch nach zumindest einem der vorhergehenden Ansprüche, **dadurch gekennzeichnet, dass** das Elastomer ein Kautschuk ist

4. Mehrschichtiger Schlauch nach zumindest einem der vorhergehenden Ansprüche, **dadurch gekennzeichnet, dass** der Kautschuk ein Ethylen-Acrylat-Kautschuk ist.

5. Mehrschichtiger Schlauch nach zumindest einem der vorhergehenden Ansprüche, **dadurch gekennzeichnet, dass** der Markierungsabschnitt (4) durch Farbe (4) gebildet wird.

6. Mehrschichtiger Schlauch nach zumindest einem der vorhergehenden Ansprüche, **dadurch gekennzeichnet, dass** die Farbe (4) eine Jod-Verbindung enthält.

7. Mehrschichtiger Schlauch nach zumindest einem der vorhergehenden Ansprüche, **dadurch gekennzeichnet, dass** die Jod-Verbindung lopamidol ist.

8. Mehrschichtiger Schlauch nach zumindest einem der vorhergehenden Ansprüche, **dadurch gekennzeichnet, dass** die Farbe Kaliumjodid enthält.

9. Mehrschichtiger Schlauch nach zumindest einem der vorhergehenden Ansprüche, **dadurch gekennzeichnet, dass** die Farbe Kaliumbromid enthält.

10. Mehrschichtiger Schlauch nach zumindest einem der vorhergehenden Ansprüche, **dadurch gekennzeichnet, dass** die Farbe (4) mittels eines Druckers auf den Schlauch (1) aufbringbar ist.

11. Mehrschichtiger Schlauch nach zumindest einem der vorhergehenden Ansprüche, **dadurch gekennzeichnet, dass** der Drucker ein Tintenstrahldrucker ist.

12. Mehrschichtiger Schlauch nach zumindest einem der vorhergehenden Ansprüche, **dadurch gekennzeichnet, dass** der Drucker ein Tampondrucker ist.

13. Mehrschichtiger Schlauch nach zumindest einem der vorhergehenden Ansprüche, **dadurch gekennzeichnet, dass** die Markierungsabschnitte (4) in Längsrichtung beabstandet und wiederholend angebracht sind.

14. Verfahren zum Herstellen eines mehrschichtigen Schlauchs (1) nach den Ansprüchen 1 bis 13, **dadurch gekennzeichnet, dass** die erste opake Schicht (2) extrudiert wird, danach die Markierungsabschnitte (4), die unter Anwendung von Röntgenstrahlen lesbar sind, aufgebracht werden und anschließend zumindest eine zweite opake Schicht (3) darauf extrudiert wird.

15. Verfahren nach Anspruch 14, **dadurch gekennzeichnet, dass** ein Haftvermittler zwischen der ersten (2) und der zweiten Schicht (3) aufgebracht wird.

16. Verfahren nach Anspruch 14 oder 15, **dadurch gekennzeichnet, dass** die Markierungsabschnitte (4) durch Aufdrucken auf die Schicht (2) aufgebracht werden.

17. Verfahren nach zumindest einem der Ansprüche 14 bis 16, **dadurch gekennzeichnet, dass** sich die Markierungsabschnitte (4) in Längsrichtung erstrecken.

## Claims

1. A multilayer hose comprising a first extrudable layer (2) and at least one second layer (3), said layers being connected to one another and said first layer (2) being opaque, and further comprising at least one marking section (4) which is arranged between said layers (2, 3) and which is adapted to be read making use of X rays, **characterized in that** also the second layer (3) is extrudable and opaque.

2. A multilayer hose according to claim 1, **characterized in that** at least one layer (2, 3) is made of an elastomer.

3. A multilayer hose according to at least one of the preceding claims, **characterized in that** the elastomer is a rubber.

4. A multilayer hose according to at least one of the preceding claims, **characterized in that** the rubber is an ethylene acrylate rubber.

5. A multilayer hose according to at least one of the preceding claims, **characterized in that** the marking section (4) is formed by an ink (4).

6. A multilayer hose according to at least one of the preceding claims, **characterized in that** the ink (4) contains an iodine compound.

7. A multilayer hose according to at least one of the preceding claims, **characterized in that** the iodine compound is iopamidole.

8. A multilayer hose according to at least one of the preceding claims, **characterized in that** the ink contains potassium iodide.

9. A multilayer hose according to at least one of the preceding claims, **characterized in that** the ink contains potassium bromide.

10. A multilayer hose according to at least one of the preceding claims, **characterized in that** the ink (4) is applicable to the hose (1) by means of a printer.

11. A multilayer hose according to at least one of the preceding claims, **characterized in that** the printer is an ink-jet printer.

12. A multilayer hose according to at least one of the preceding claims, **characterized in that** the printer is a tampon printer.

13. A multilayer hose according to at least one of the preceding claims, **characterized in that** the marking sections (4) are provided in longitudinally spaced relationship with one another in a recurring mode of arrangement.

14. A method for producing a multilayer hose (1) according to claims 1 to 13, **characterized in that** the first opaque layer (2) is extruded, that the marking sections (4), which are adapted to be read making use of X rays, are then applied, and that, subsequently, at least one second opaque layer (3) is extruded onto said marking sections.

15. A method according to claim 14, **characterized in that** an adhesion promoter is applied between said first (2) and said second layer (3).

16. A method according to claim 14 or 15, **characterized in that** the marking sections (4) are applied by printing onto the layer (2).

17. A method according to at least one of the claims 14 to 16, **characterized in that** the marking sections (4) extend in the longitudinal direction.

## Revendications

1. Tuyau multicouche comprenant une première couche (2) apte à être extrudée et au moins une deuxième couche (3) qui sont reliées entre elles, la première couche (2) étant opaque, et au moins une section de marquage (4), la section de marquage (4) étant disposée entre les couches (2, 3) et étant apte à être lue à l'aide de rayons X, **caractérisé en ce que** la deuxième couche (3) est elle aussi apte à être extrudée et opaque.

2. Tuyau multicouche selon la revendication 1, **caractérisé en ce qu'**au moins une couche (2, 3) se compose d'un élastomère.

3. Tuyau multicouche selon l'une au moins des revendications précédentes, **caractérisé en ce que** l'élastomère est un caoutchouc.

4. Tuyau multicouche selon l'une au moins des revendications précédentes, **caractérisé en ce que** le caoutchouc est un caoutchouc éthylène-acrylate.

5. Tuyau multicouche selon l'une au moins des revendications précédentes, **caractérisé en ce que** la section de marquage (4) est formée par un colorant (4).

6. Tuyau multicouche selon l'une au moins des revendications précédentes, **caractérisé en ce que** le colorant (4) contient un composé de l'iode.

7. Tuyau multicouche selon l'une au moins des revendications précédentes, **caractérisé en ce que** le composé de l'iode est constitué par l'iopamidol.

8. Tuyau multicouche selon l'une des revendications précédentes, **caractérisé en ce que** le colorant contient de l'iodure de potassium.

9. Tuyau multicouche selon l'une au moins des revendications précédentes, **caractérisé en ce que** le colorant contient du bromure de potassium.

10. Tuyau multicouche selon l'une au moins des revendications précédentes, **caractérisé en ce que** le colorant (4) est apte à être appliqué sur le tuyau (1) à l'aide d'une imprimante.

11. Tuyau multicouche selon l'une au moins des revendications précédentes, **caractérisé en ce que** l'imprimante est une imprimante à jet d'encre.

12. Tuyau multicouche selon l'une au moins des revendications précédentes, **caractérisé en ce que** l'imprimante est une imprimante à tampon.

13. Tuyau multicouche selon l'une au moins des revendications précédentes, **caractérisé en ce que** les sections de marquage (4) sont espacées dans le sens longitudinal et sont appliquées de manière répétée.

14. Procédé pour fabriquer un tuyau multicouche (1) selon les revendications 1 à 13, **caractérisé en ce qu'**on extrude la première couche opaque (2), puis on applique les sections de marquage (4) qui sont aptes à être lues à l'aide de rayons X, et on extrude ensuite au moins une deuxième couche opaque (3) par-dessus.

15. Procédé selon la revendication 14, **caractérisé en ce qu'**on applique un agent adhésif entre la première couche (2) et la deuxième couche (3).

16. Procédé selon la revendication 14 ou 15, **caractérisé en ce qu'**on applique les sections de marquage (4) par surimpression sur la couche (2).

17. Procédé selon l'une au moins des revendications 14 à 16, **caractérisé en ce que** les sections de marquage (4) s'étendent dans le sens longitudinal.
